# EUROPÄISCHE PATENTSCHRIFT

(11) **EP 3 153 265 B1**
(45) Veröffentlichungstag und Bekanntmachung des Hinweises auf die Patenterteilung: **14.09.2022**
(21) Anmeldenummer: 15188351.9
(22) Anmeldetag: 05.10.2015
(51) Int. Cl.: B23D 45/12, B23D 57/00, B24C 1/04, B23K 37/02, B23Q 9/00, B24B 27/06, B23B 5/14, B23B 5/16

(54) **WERKZEUGFÜHRUNGSANORDNUNG**
TOOL GUIDING ASSEMBLY
SYSTÈME DE GUIDAGE D'OUTIL

(43) Veröffentlichungstag der Anmeldung: 12.04.2017
(73) Patentinhaber: Bergmann, Mirko, 29664 Walsrode (DE)
(72) Erfinder: Bergmann, Mirko, 29664 Walsrode (DE)
(74) Vertreter: Hansen, Jochen

(56) Entgegenhaltungen:
- WO-A1-2010/127737
- DE-A1-102011 056 931
- JP-A- S60 148 925
- US-A- 4 716 271
- US-A- 5 394 776
- US-A- 5 557 995

## Beschreibung

Die Erfindung betrifft eine Werkzeugführungsanordnung nach dem Oberbegriff des Anspruchs 1 zur Führung eines einen horizontalen Schnitt ausführenden Schneidwerkzeuges an der Außenwandung eines länglichen aufrecht stehenden Körpers mit einem im Wesentlichen kreisförmigen Querschnitt, nämlich einem konisch zulaufenden Turm, insbesondere einer Windenergieanlage, umfassend einen Hauptring, der um die Außenwandung legbar ist und einen Werkzeugring, sowie Halteanordnungen zur Befestigung auf der Außenwandung des aufrecht stehenden Körpers. Aus dem Stand der Technik sind unterschiedliche Anordnungen bekannt, um horizontale Schnitte in länglichen aufrecht stehenden Körpern mittels einer Werkzeugführungsanordnung durchzuführen.

Hierzu wird exemplarisch auf die Druckschrift DE 10 2011 056 931 B4 des Anmelders verwiesen, aus der eine Werkzeugführungsvorrichtung zur Führung einer Strahlschneiddüsenvorrichtung an der Innenwandung eines Turmes einer Windenergieanlage offenbart ist, die mit einem im Inneren des zu schneidenden Objektes arbeitenden Zentrierstern ausgestattet ist, der mit einer Zentralaufnahme, mindestens drei in deren Länge verstellbaren und von der Zentralaufnahme radial wegführenden Haltearmen an der Innenwandung ortsfest gehalten wird, wobei hierzu die Haltearme an deren Enden Kontaktmittel zur lösbaren Kontaktaufnahme zur Innenwandung aufweisen, und weiter an dem Zentrierstern ein entsprechender Werkzeugstern mit Werkzeugarmen vorgesehen ist, wobei der Werkzeugstern drehbar mit dem Zentrierstern verbunden ist.

Andere Formen des Rückbaus sind mögliche massive Eingriffe durch Sprengung oder Abriss durch Abbruchbagger und dergleichen, die jedoch nicht überall einsetzbar sind.

Aus der Druckschrift JP S60 148925 A ist eine Werkzeugführungsanordnung nach dem Oberbegriff des Anspruchs 1 zum Schneiden von Stahlrohrpfählen mit einem zweiteiligen, ringförmigen Führungsrahmen bekannt, bei der Schneidwerkzeuge auf einem drehbar am Führungsrahmen angebrachten Ring geführt sind. Ähnliche Anordnungen sind aus der Druckschrift US 5 557 995 A sowie aus den Druckschriften US 5 394 776 A, US 4 716 271 A und WO 2010/127737 A bekannt.

Die Probleme im Stand der Technik sind im Wesentlichen die schlechte Zugänglichkeit des Innenraums eines zu schneidenden Objektes bzw. Körpers. Zudem sollen die Schneidzeiten und auch mögliche Kranzeiten, die möglicherweise nötig sind um Segmente abzuheben und auf den Boden zu transportieren, auf ein Minimum reduziert werden.

Der vorliegenden Erfindung liegt die Aufgabe zugrunde, eine Werkzeugführungsanordnung aufzuzeigen, die sehr schnell arbeitet, flexibel einsetzbar ist, womit unterschiedliche Grundrisse und Dimensionen nämlich konisch zu laufende Türme rückgebaut werden können.

Gelöst wird diese Aufgabe mit einer Werkzeugführungsanordnung gemäß Hauptanspruch.

Die Werkzeugführungsanordnung zur Führung eines einen horizontalen Schnitt ausführenden Schneidwerkzeuges an der Außenwandung eines länglichen aufrecht stehenden Körpers mit einem im Wesentlichen kreisförmigen Querschnitt, nämlich einem konisch zulaufenden Turm, insbesondere einer Windenergieanlage, umfasst
- einen Hauptring, der um die Außenwandung legbar ist, mit mindestens drei Haltearmen, wobei diese in deren Länge verstellbar sind und radial in Richtung des Mittelpunktes des Hauptringes am Hauptring angeordnet sind und an deren zum Mittelpunkt des Hauptringes zeigenden Enden Kontaktmittel zur lösbaren Kontaktaufnahme zur Außenwandung vorgesehen sind, wobei der Winkel vom Mittelpunkt des Hauptringes aus gesehen zwischen zwei benachbarten Haltearmen gleich ist;
- einen Werkzeugring, der über eine Lagerung und / oder Drehkranz mit dem Hauptring verbunden ist, wobei der Werkzeugring relativ zu dem Hauptring drehbar gelagert ist,
- der Hauptring und der Werkzeugring sich um eine gemeinsame Drehachse durch deren gemeinsamen Mittelpunkt gegeneinander verdrehend gelagert sind und zum Verdrehen des Werkzeugringes relativ zum Hauptring ein Antrieb vorgesehen ist;
- wenigstens eine Werkzeugaufnahme umfassend einen Werkzeugarm, wobei der Werkzeugarm am Werkzeugring und ein Schneidwerkzeug zumindest teilweise an der Werkzeugaufnahme des Werkzeugarmes angeordnet ist, wobei der Werkzeugarm in dessen Länge verstellbar ausgebildet ist und radial in Richtung des Mittelpunktes des Werkzeugringes ausgerichtet ist,
wobei der Hauptring beim Verdrehen des Werkzeugringes ortsfest und kraftschlüssig mit der Außenwandung verbunden ist.

Zum Verfahren der Werkzeugführungsanordnung in der Höhe ist ein Hubring auf der Werkzeugring-fernen Seite des Hauptringes vorgesehen, wobei der Hubring mittels einer Hubanordnung mit dem Hauptring verbunden ist, so dass der Abstand zwischen Hauptring und Hubring verstellbar ist. Hierzu weist der Hubring mindestens drei Hubhaltearme auf, wobei die Hubhaltearme radial zum Mittelpunkt des Hubringes an dem Hubring angeordnet sind und an deren zum Mittelpunkt des Hubringes zeigenden Enden Kontaktmittel zur lösbaren Kontaktaufnahme zur Außenwandung vorgesehen sind, so dass eine entsprechende kraftschlüssige Verbindung zum zu schneidenden Objekt realisiert wird. Ferner ist diesbezüglich der Winkel, vom Mittelpunkt des Hubringes aus gesehen, zwischen zwei benachbarten Haltearmen gleich und sind der Hubring und der Hauptring parallel zueinander ausgerichtet.

Auf diese Art und Weise wird eine selbst kletternde Werkzeugführungsanordnung realisierbar. Zudem kann der Hubring zusätzlich als Stützelement während des Schneidvorganges verwendet werden. Insbesondere ist auch eine Kraftverteilung hierdurch möglich.

Die Werkzeugführungsanordnung ist erfindungsgemäß für die Verwendung an einer Außenwandung eines länglichen und aufrecht stehenden Körpers bzw. Objektes, nämlich Türme, Windenergieanlagentürme. Diese aufrecht stehenden Körper haben einen im Wesentlichen runden Querschnitt. Die zu schneidenden Objekte bzw. Körper können unterschiedliche Wandungen aufweisen und aus den unterschiedlichsten Materialien bestehen. Die Ausgestaltung des Hauptringes und des Werkzeugringes können entsprechend groß dimensioniert werden, um die Werkzeugführungsanordnung flexibel einsetzen zu können, so dass diese für nahezu alle zu schneidenden Objekte einsetzbar ist. Dementsprechend können die Halte- und / oder Werkzeugarme mit entsprechenden Adapterverlängerungen versehen werden, um so an die Gegebenheiten angepasst zu werden.

Der Winkel zwischen zwei benachbarten Haltearmen ist gleich groß. Bei drei Haltearmen beträgt somit der Winkel jeweils 120°, so dass eine optimale Kraftverteilung und Justierung erfolgt.

Als Antriebsmittel zum Rotieren des Werkzeugringes relativ zum Hauptring können elektrische oder hydraulische Antriebe verwendet werden. Exemplarisch können auch Zahnkranzantriebe eingesetzt werden.

Als Vorteil der Anordnung der Werkzeugführungsanordnung auf der Außenseite des zu schneidenden Objektes soll an dieser Stelle noch angeführt werden, dass es Objektes gibt, deren inneres stark verschmutzt oder auch kontaminiert ist, so dass ein Betreten des Inneren für gerade diese Rückbaumaßnahmen verhindert werden sollte. Zudem ist das Anbringen an der Außenseite oftmals einfacher als ein Einbringen der Werkzeugführungsanordnung im Innenraum.

Insbesondere sind die Kontaktmittel Halteplatten mit Spikes, Stollen, Verankerungsmitteln, Elastomeren und / oder Hartgummibelag. Hierdurch kann ausreichend Halt gewährleistet werden. Alternativ kann die Werkzeugführungsanordnung auch über die Kontaktmittel angebolzt, angeschraubt oder angeklebt werden, wobei die Kontaktmittel auch austauschbar und / oder abnehmbar sind.

Bevorzugt kann zur besseren Anpassung ein Gelenk zwischen dem Haltearm und dem Kontaktmittel vorgesehen sein, wodurch die Werkzeugführungsanordnung flexibler anpassbar wird.

In einer bevorzugten Ausgestaltungsform kann der Hauptring und / oder der Werkzeugring, bevorzugt insbesondere beide, wenigstens zweifach oder aber auch dreifach, vierfach segmentiert ausgebildet sein, wobei hierdurch das Positionieren der Werkzeugführungsanordnung an dem zu schneidenden Objekt relativ leicht zu handhaben ist, indem die einzelnen Segmente abschnittsweise um den Körper herumgelegt werden und miteinander über entsprechende Verbindungen zu einer Werkzeugführungsanordnung zusammen geschlossen werden.

Insbesondere können an dem Werkzeugring wenigstens zwei oder wenigstens drei Werkzeugaufnahmen vorgesehen sein, so dass mehrere Werkzeuge an jeweils unterschiedlichen Stellen des Umfanges ihren jeweiligen Schneidprozess starten, wodurch ein erheblicher Zeitvorteil entsteht.

Zusätzlich können zu der erfindungsgemäßen Ausgestaltung mit einem Hubring eine in der Länge veränderbare Aufhängevorrichtung, bevorzugt eine Seilkonstruktion, und/oder Abstützvorrichtung, bevorzugt ein Gerüst und / oder ausfahrbare Hydraulikzylinder, wie Teleskopzylinder, zur Aufhängung und / oder Abstützung vorgesehen sein, mittels derer die Höhenposition der Werkzeugführungsanordnung außerhalb der Röhre oder des Turmes verändert werden kann.

Selbstverständlich können insgesamt Sensoren und entsprechende Steuerungen zur Überwachung, Kontrolle und Steuerung der Anordnung vorgesehen werden.

Die Haltearme und / oder die Werkzeugarme und / oder die Hubhaltearme und / oder die Hubanordnung können in einer besonders bevorzugten Ausführungsform als hydraulische Zylinder ausgebildet sein. Ferner sind noch pneumatische Zylinder oder aber auch elektrische Verstellungen denkbar. Insbesondere können auch entsprechende Arretierfunktionen vorgesehen sein, so dass selbst bei Versagen der Kraftzufuhr, beispielsweise durch fehlenden Öldruck die Werkzeugführungsanordnung nicht herunterrutscht.

Eine bevorzugte Ausführungsvariante weist genau drei Haltearme und drei Werkzeugarme auf, wobei jedoch auch mehr Werkzeugarme, beispielsweise vier bis sechs, oder aber auch mehr Haltearme durchaus von Vorteil sein können.

Zudem könnte der Hauptring auch noch derart ausgestaltet werden, dass dieser von Personen begangen werden könnte, so dass Arbeiter auf dem Hauptring Arbeiten vollziehen können. Ferner kann eine Aufhängevorrichtung vorgesehen sein, aufweisend ein Hubseil oder ein Hubelement und eine Aufnahme für ein Kranseil, wobei die Aufhängevorrichtung auf der obersten horizontalen Ebene des zu schneidenden aufrecht stehenden Körpers auflegbar ist und über den äußeren Umfang des Körpers wenigstens teilweise hinausragt und das Hubseil oder das Hubelement seitlich des Körpers mit dem Hauptring verbindbar ausgestaltet sind, so dass der Hauptring in dessen Höhe verstellbar / verfahrbar ist, wobei beim Verstellen oder Verfahren des Hauptrings in dessen Höhe der Hauptring über das Hubseil oder das Hubelement an der Aufhängevorrichtung hängt.

Die Aufhängevorrichtung kann eine Segmentaufnahme und / oder Haltekrallen zur Aufnahme von geschnittenen Segmenten aufweisen. Hierbei ist es möglich, dass die Aufhängevorrichtung auf dem obersten Segment gehalten wird und gleichzeitig mit dem obersten Segment kraftschlüssig verbunden wird, so dass während des Schneidens oder zumindest nach dem Schneiden das Segment über einen Kran, beispielsweise einen mobilen Kran, der zur Demontage vorgehalten wird, gehalten wird, so dass der Schneidvorgang vollständig umlaufend erfolgen kann, ohne dass das oberste geschnittene Segment auf den verbleibenden Rest des zu schneidenden Körpers hinuntersackt. Unmittelbar nach der Beendigung des Schneidvorganges könnte zunächst das oberste Segment zusammen mit der Aufhängevorrichtung heruntergehoben werden, nach Absetzen auf den Boden oder einer Transporteinheit würde sodann die Aufhängevorrichtung von dem heruntergehobenen Segment getrennt werden und wieder auf den verbleibenden Körper, beispielsweise einen Turm, aufgesetzt werden. Nachdem die Aufhängevorrichtung wieder auf den obersten nunmehr zu schneidenden Segment aufgesetzt wurde, würde eine Verbindung zur Werkzeugführungsanordnung wieder hergestellt werden, so dass die Werkzeugführungsanordnung erneut in dessen Höhe verfahren werden kann. Alternativ kann auch zunächst die Werkzeugführungsanordnung nach dem Schneidvorgang verfahren werden, wobei erst danach das bereits geschnittene Segment abgehoben wird, wodurch die Werkzeugführungsanordnung bereits mit dem nächsten Schnitt beginnen kann.

Ferner können wenigstens entsprechend der Anzahl der Werkzeugaufnahmen Schnittbeabstandungsanordnungen mit dazugehörigen Schnittbeabstandungshalterungen an dem Hauptring vorgesehen sein, also beispielsweise bei drei Werkzeugarmen mit angeordneten Schnittwerkzeugen nunmehr drei Schnittbeabstandungsanordnungen, wobei die Schnittbeabstandungsordnungen nach Beginn des Schneidvorganges in den Schnittkanal in Bereich des Startpunktes des Schneidvorganges eingeführt werden, so dass ein Absinken des teilweise oder vollständig geschnittenen Abschnittes bzw. Segmentes ausgeschlossen ist, wodurch der Schnittkanal offen gehalten ist. Derartige Schnittbeabstandungsanordnungen können als einfache Eisen, Flacheisen oder entsprechend ausgestaltete Keile ausgebildet sein, die dann in den Schnittkanal eingeführt werden können.

Die Schneidwerkzeuge sind auswählbar aus der nachfolgenden Aufzählung, nämlich:
- Plasmaschneider,
- Bandschneider, Schneidseil, Trennseil, Zugkettenseil, Seilsäge,
- Sägeblatt,
- Laser,
- Düsenmagazin, mit wenigstens einer Schneiddüse und / oder Abrasivschneiddüse und /oder
eine Kombination aus den zuvor Genannten.

Bei einer möglichen Ausgestaltung mit einem Schneidseil oder einer Seilsäge und dergleichen können entsprechende verfahrbare Seilspanner, Antriebsrollen und / oder Führungsrollen vorgesehen werden, wobei diese auf dem Werkzeugring angeordnet sein können und entsprechend weit nach außen verfahrbar sind, um so das sich laufend in das zu schneidende Objekt hineinschneidende Sägeseil zu spannen, so dass immer ein Schneidprozess möglich ist. Hierbei ist es ebenfalls besonders von Vorteil, wenn sich der Werkzeugring auf dem ortsfesten Hauptring bewegt, da so rundum das zu schneidende Objekt eingeschnitten werden kann. Diesbezüglich können auch Kühlungsbereiche vorgesehen werden.

Möglich ist zudem eine Ausführungsvariante mit einer Seilsäge als Schneidwerkzeug, wobei hierbei individuell einstellbare Umlenkrollen die Seilsäge führen können und ferner Spannrollenanordnungen vorgesehen sein können, um die Seillänge während des Schneidvorganges entsprechend anzupassen. Bei dieser Ausgestaltung ist es möglich, aber nicht gemäß der Erfindung, dass unter Umständen auch ein sich nicht drehender Werkzeugring vorgesehen werden kann, so dass die Seilsäge den Schneidvorgang eigenständig vollzieht.

Es ist aber auch durchaus möglich, aufrecht stehende Körper mittels einer speziellen Ausgestaltung dieser Werkzeugführungsanordnung horizontal zu schneiden, die einen komplexeren Grundriss aufweisen, wenn beispielsweise Seilsägen verwendet werden. Mittels der Seilsägen können auch komplexe geometrische Grundrisse horizontal durchtrennt werden, da sich die Seilsäge immer um die äußeren Punkte selbstständig anlegt und durch kontinuierliches Durchschneiden letztendlich die gesamte Struktur zerschneidet. Selbstverständlich gehören zu den Schneidwerkzeugen an sich auch entsprechende Antriebsmittel, wie Elektromotoren, Druckbeaufschlagungsanordnungen, z.B. für etwaige vorzusehende Schneiddüsen mit Wasser und / oder Granulaten oder allgemeinen Versorgungseinheiten.

Gleichwohl sind neben den erfindungsgemäßen Schneidwerkzeugen noch weitere Werkzeuge denkbar. Beispielsweise und nicht abschließend sind hier zu nennen, eine nicht erfindungsgemäße Schweißvorrichtung beispielsweise zum Verschweißen zweier Rohrsegmente, eine Schneidvorrichtung wie beispielsweise eine Diamantbesetzte rotierende Trennscheibe.

Nachfolgend wird ein Ausführungsbeispiel der Erfindung und weitere nicht erfindungsgemäße Beispiele anhand der beiliegenden Zeichnungen in der Figurenbeschreibung detailliert beschrieben, wobei diese die Erfindung erläutern sollen und nicht beschränkend zu werten sind.

Es zeigen:
- Fig. 1: eine Draufsicht in schematischer Darstellung eines nicht erfindungsgemäßen Beispiels einer Werkzeugführungsanordnung mit einem ersten Schneidwerkzeug, die um einen Turm einer Windenergieanlage angeordnet ist;
- Fig. 2: eine Seitenschnittansicht in schematischer Darstellung des nicht erfindungsgemäßen Beispiels einer Werkzeugführungsanordnung entsprechend der Fig. 1;
- Fig. 3: eine Seitenschnittansicht in schematischer Darstellung eines erfindungsgemäßen Ausführungsbeispiels der Werkzeugführungsanordnung;
- Fig. 4: eine Seitenschnittansicht in schematischer Darstellung eines nicht erfindungsgemäßen Beispiels einer Werkzeugführungsanordnung;
- Fig. 5: eine Draufsicht in schematischer Darstellung eines nicht erfindungsgemäßen Beispiels einer Werkzeugführungsanordnung mit einer Seilsäge, die um einen Turm einer Windenergieanlage angeordnet ist;
- Fig. 6: eine schematische Detaildarstellung des nicht erfindungsgemäßen Beispiels einer Werkzeugführungsanordnung, nämlich einer Spannvorrichtung für eine Seilsäge;
- Fig. 7: eine Seitenschnittansicht in schematischer Darstellung eines nicht erfindungsgemäßen Beispiels einer Werkzeugführungsanordnung mit einem Trennscheibenschneidwerkzeug;
- Fig. 8: eine Seitenschnittansicht in schematischer Darstellung eines abgewandelten nicht erfindungsgemäßen Beispiels einer Werkzeugführungsanordnung mit einem Trennscheibenschneidwerkzeug und einer Schnittbeabstandungsanordnung;
- Fig. 9: eine Seitenschnittansicht in schematischer Darstellung des nicht erfindungsgemäßen Beispiels einer Werkzeugführungsanordnung entsprechend der Fig. 8;
- Fig. 10: eine schematische Darstellung einer zu demontierenden Windenergieanlage;
- Fig. 11: eine schematische Darstellung der Werkzeugführungsanordnung gemäß dem Ausführungsbeispiel aus Fig. 3 eines noch vollständig rück zu bauenden Turmes einer zu demontierenden Windenergieanlage;
- Fig. 12: ein Vergrößerungsausschnitt aus der Fig. 11 mit einer Detaildarstellung der Werkzeugführungsanordnung im oberen Abschnitt des Turmes gezeigt und
- Fig. 13: eine schematische Darstellung der Werkzeugführungsanordnung gemäß dem Ausführungsbeispiel aus Fig. 3 und des bereits teilrückgebauten Turmes entsprechend der Fig. 11 der zu demontierenden Windenergieanlage.

An dieser Stelle soll angemerkt werden, dass die Erfindung nachfolgend am Rückbau eines Turmes einer Windenergieanlage näher erläutert wird, gleichwohl aber nicht auf diese Art von Objekt beschränkt werden soll.

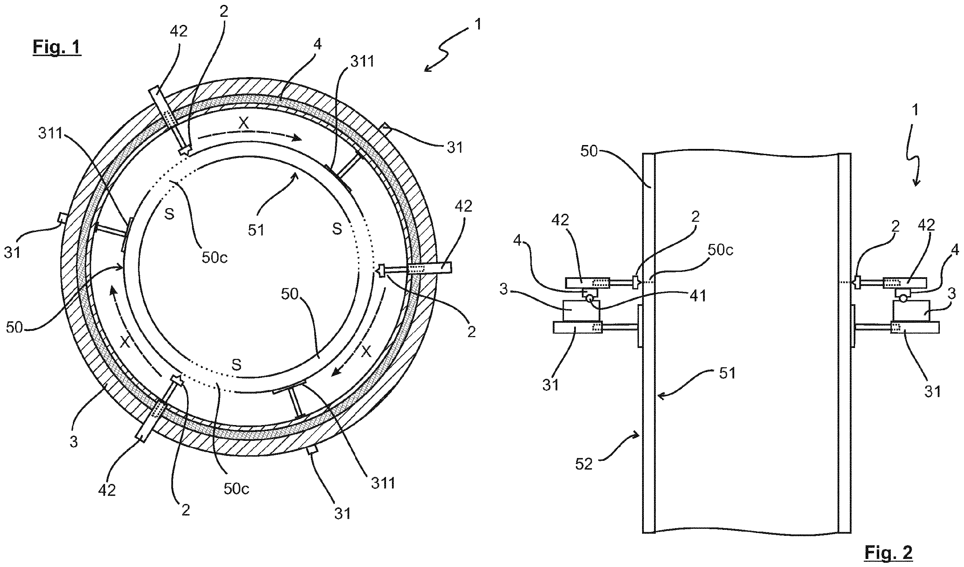

In Fig. 1 ist eine Draufsicht in schematischer Darstellung eines nicht erfindungsgemäßen Beispiels einer Werkzeugführungsanordnung 1 mit einem ersten Schneidwerkzeug 2, die um einen Turm 50 einer Windenergieanlage 5 angeordnet ist, dargestellt.

Die Werkzeugführungsanordnung 1 umfasst einen Hauptring 3, der in einer ersten Ebene um den Turm 50 gelegt ist. Zur einfachen Ausbildung kann dieser Hauptring 3 beispielsweise in drei Segmenten ausgebildet sein, um diesen einfacher um den Turm 50 anzulegen.

Weiter umfasst die Werkzeugführungsanordnung 1 auf dem Hauptring 3 oberhalb dessen einen Werkzeugring 4, der über eine Lagerung bzw. einen Drehkrank 41 mit dem Hauptring 3 verbunden ist, so dass sich der Werkzeugring 4 relativ zu dem Hauptring 3 verdrehen lässt. Das Verdrehen erfolgt hierbei über einen nicht dargestellten Antrieb, der bevorzugt an dem Hauptring 3 angeordnet ist. Zudem kann auch der Werkzeugring 4 als auch die Lagerung bzw. der Drehkranz 41 segmentiert ausgebildet sein, um diesen im Anschluss an die Anbringung des Hauptringes 3 auf diesem aufzusetzen.

Die Lagerung bzw. der Drehkranz 41 kann auch fest mit dem Hauptring 3 verbunden sein bzw. zusätzlich um den Werkzeugring 4 ergänzt werden, wobei sich entsprechend eines möglichen Ausführungsbeispiels drei Segmente ausbilden.

Der Hauptring 3 weist zudem drei Haltearme 31 auf, die an deren zum Turm 50 weisenden Enden jeweils ein Kontaktmittel 311 aufweisen, wobei das Kontaktmittel 311 dazu dient, eine kraftschlüssige Verbindung, die zudem auch noch lösbar sein sollte, mit der Außenwandung 52 des Turmes 50 herzustellen.

An dem Werkzeugring 4 sind weiter drei Werkzeugarme 42 angeordnet, an deren zum Turm 50 weisenden Enden jeweils ein Schneidwerkzeug 2, beispielsweise eine Schneiddüsenanordnung angeordnet ist, so dass diese Schneidwerkzeug 2 von einem jeweiligen Startpunkt S, von denen es in diesem Beispiel drei Stück gibt, den Schneidvorgang durch die Turmwandung von der Außenwandung 52 zur Innenwandung 51 vollziehen können und so eine durchtrennte Wandung 50c entsteht, so dass ein einzelnes abgetrenntes Turmsegment 50x horizontal abgetrennt wird.

In dieser Ausführung wird somit auf einfachste Weise von drei Startpunkten S beginnend jeweils ein Schnitt um 120° von der Außenwandung 52 zur Innenwandung 51 durch die drei Schneidwerkzeuge 2 ausgeführt, wobei sich der Werkzeugring 4 mit den daran ortsfesten Werkzeugarmen 42 in Bewegungsrichtung X oberhalb des Hauptringes 3 dreht / bewegt.

**Fig. 2** zeigt eine Seitenschnittansicht in schematischer Darstellung des nicht erfindungsgemäßen Beispiels einer Werkzeugführungsanordnung 1 entsprechend der Fig. 1.

In dieser Darstellung ist die Stapelung der Ringe, nämlich Hauptring 3 mit den unterhalb des Hauptrings 3 angeordneten Haltearmen 31 sowie mit der bzw. dem oberhalb des Hauptrings 3 angeordneten Lagerung / Drehkranzes 41 zu erkennen. Oberhalb des Drehkranzes bzw. der Lagerung 41 ist der Werkzeugring 4 entsprechend drehbar gelagert angeordnet, wobei auf diesem Werkzeugring 4 oberhalb die Werkzeugarme 42 mit den Schneidwerkzeugen 2 montiert sind.

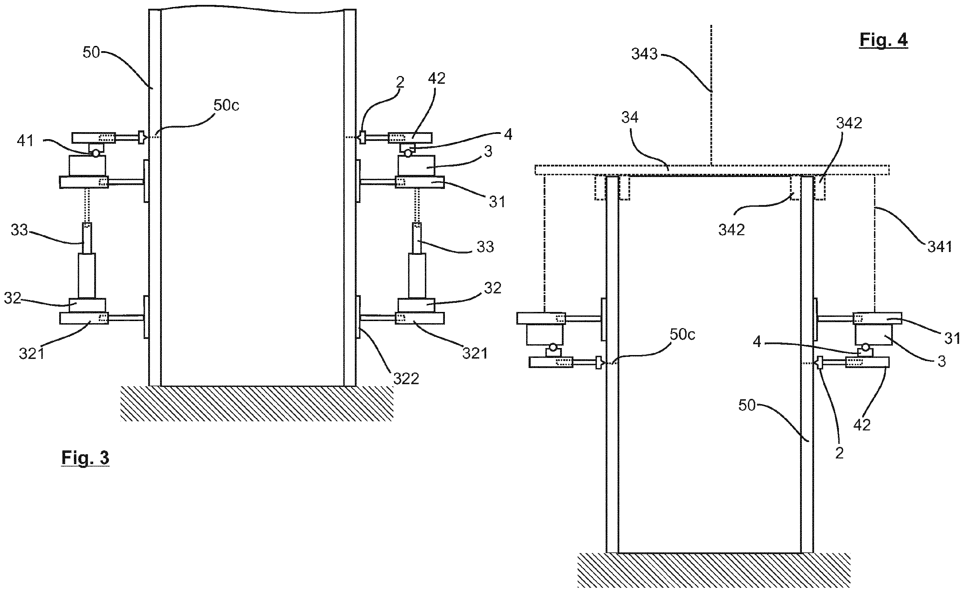

Fig. 3 zeigt eine Seitenschnittansicht in schematischer Darstellung eines erfindungsgemäßen Ausführungsbeispiels der Werkzeugführungsanordnung 1.

Zusätzlich zu der nicht erfindungsgemäßen Ausführungsvariante gemäß den Fig. 1 und 2 ist in diesem Ausführungsbeispiel unterhalb des Hauptringes 3 ein Hubring 32 vorgesehen, der auch segmentiert ausgebildet sein kann. Der Hubring 32 weist eine Verbindung zum Hauptring 3 auf, die über eine Hubanordnung 33 realisiert ist und wie in diesem Beispiel ausgeführt, als Teleskophydraulikzylinder ausgebildet ist.

Weiter sind unterhalb des Hubringes 32 drei Hubhaltearme 321 mit an deren zum Turm 50 weisenden Enden angeordneten Kontaktmitteln 322 vorgesehen, so dass die Hubhaltearme 321 in Verbindung mit den Kontaktmitteln 322 eine kraftschlüssige Verbindung des Hubringes 32 mit der Außenwandung 52 des Turmes 50 herstellen können. In diesem Ausführungsbeispiel sind die Hubhaltearme 321 als hydraulische Zylinder ausgebildet.

Mittels dieser Ausführung der Werkzeugführungsanordnung 1 ist es möglich, dass eine selbstkletternde Werkzeugführungsanordnung 1 ausgebildet wird. Hierzu wird zum Selbstklettern, nämlich nach oben als auch nach unten, zunächst der Hubring 32 kraftschlüssig mit dem Turm 50 verbunden, im Anschluss daran die Haltearme 31 des Hauptringes 3 vom Turm 50 gelöst und die Hubanordnung 33 zum Absenken eingefahren bzw. zum Anheben ausgefahren. Nach dem Verfahrvorgang des Hauptringes 3 erfolgt die erneute kraftschlüssige Verbindung des Hauptringes 3 mit dem Turm 50 über die Haltearme 31 des Hauptringes 3. Nach der Fixierung des Hauptringes 3 können die Hubhaltearme 321 des Hubringes 32 gelöst werden und bereits in eine neue Position verfahren werden, an der der Hubring 32 erneut wieder fixiert werden kann, so dass eine zusätzliche Stabilität der Werkzeugführungsanordnung 1 möglich wird.

In Fig. 4 ist eine Seitenschnittansicht in schematischer Darstellung eines nicht erfindungsgemäßen Beispiels einer Werkzeugführungsanordnung 1 dargestellt Es ist der Hauptring 3 mit den daran angeordneten Elementen 31, 311, 4, 41, 42 und 2 kopfüber montiert, wobei die Werkzeugführungsanordnung 1 mittels eines Hubseils 341, die an einer Aufhängevorrichtung 34 angeordnet ist, verfahrbar ist. Die Aufhängevorrichtung 34 ist ganz oben auf dem rück zu bauenden Turm 50 aufgelegt, wobei dies über ein Kranseil 343 eines Krans erfolgt.

Zusätzlich sind Segmentaufnahmen bzw. Haltekrallen 342 vorgesehen, die eine kraftschlüssige Verbindung zu dem obersten zu schneidenden Turmsegment 50x herstellen. Nach erfolgtem Schneidevorgang kann das Turmsegment 50x mittels der Aufhängevorrichtung 34, die an dem Kran befestigt ist, abgehoben und auf dem Boden abgesetzt werden.

Zusätzlich kann hierdrüber ein notwendiger Schneideabstand für die Durchtrennung der Wandung realisiert werden, indem der Kran mittels der Aufhängevorrichtung 34 das abzutrennende Turmsegment 50x leicht nach oben anhebt, so dass der Schneidspalt offen bleibt und das Turmsegment 50x nicht durch sein Eigengewicht auf dem verbleibenden Turm 50 aufsetzt.

Alternativ zu dem Hubseil 341 kann auch ein hydraulischer Teleskopzylinder eingesetzt werden, um die Werkzeugführungsanordnung 1 in der Höhe zu verfahren.

Vor dem Abheben des Turmsegmentes 50x wird die Werkzeugführungsanordnung 1 in der Höhe verfahren, in diesem Fall weiter nach unten, so dass während des Abhebens des abgetrennten Turmsegmentes 50x die Werkzeugführungsanordnung 1 bereits den nächsten Schneidevorgang durchführen bzw. zumindest beginnen kann.

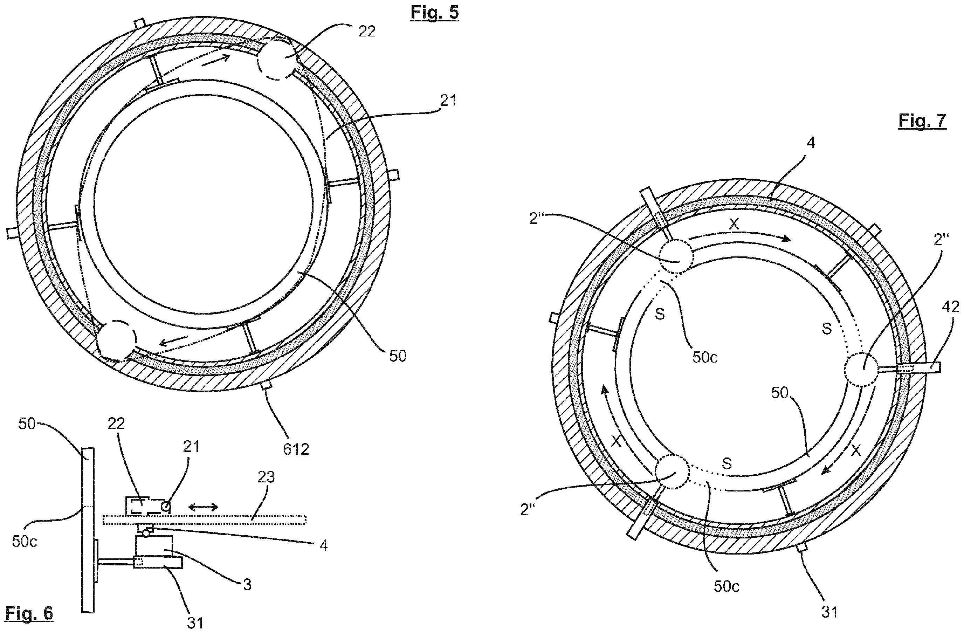

Fig. 5 zeigt eine Draufsicht in schematischer Darstellung eines nicht erfindungsgemäßen Beispiels einer Werkzeugführungsanordnung 1 mit einer Seilsäge, Schneidseilanordnung 2', die um einen Turm 50 einer Windenergieanlage 5 angeordnet ist.

Hierbei ist über zwei Umlenkrollen 22 ein Schneidseil 21 geführt, wobei die Umlenkrollen 22 auch als Antriebsrollen ausgebildet sein können. Zudem sind die Umlenkrollen 22 mittels einer Spannvorrichtung 23 nach außen verstellbar, so dass während des Schneidens und damit der Reduzierung des Turmumfanges das Schneidseil 21 dauerhaft an den Turm 50 angepasst werden kann.

Zudem wird die Schneidseilanordnung 2' mit Hilfe der auf dem Werkzeugring 4 angeordneten Umlenk-/Antriebsrollen 22 auf dem ortsfesten Hauptring 3 gedreht, so dass ein quasi kontinuierlicher vollständig umlaufender Schneidvorgang in die Außenwandung 52 des Turms 50 erfolgt. Die Turmwandung des Turms 50 wird somit vollständig umlaufend permanent reduziert, so dass nicht zunächst ein Bereich vollständig durchtrennt wird, sondern der gesamte Turm 50 umlaufend eingeschnitten wird.

In Fig. 6 ist eine schematische Detaildarstellung des nicht erfindungsgemäßen Beispiels einer Werkzeugführungsanordnung 1, nämlich einer Spannvorrichtung 23 für eine Seilsäge 2', gezeigt.

Die Spannvorrichtung 23 weist eine nach außen gerichtete Verschiebe- bzw. Verfahrmöglichkeit auf, so dass die Umlenk-/Antriebsrollen 22 an außen verfahrbar sind, um so das Schneidseil 21 zu spannen.

Fig. 7 zeigt eine Seitenschnittansicht in schematischer Darstellung eines nicht erfindungsgemäßen Beispiels einer Werkzeugführungsanordnung 1 mit einem Trennscheibenschneidwerkzeug 2".

Bei dieser Ausführungsvariante sind drei Trennscheibenschneidwerkzeuge 2" in der Werkzeugführungsanordnung 1 vorgesehen, die beispielsweise als Diamant-besetzte Trennscheiben ausgestaltet sind, wobei diese speziell auf den Werkstoff eines Stahlbetonturmes abgestimmt sind.

Die Trennscheibenschneidwerkzeuge 2" werden über Elektromotoren angetrieben und so in Rotation versetzt. Selbstverständlich können auch Spül- oder Kühlflüssigkeiten eingesetzt werden, um den Schneidvorgang zu optimieren.

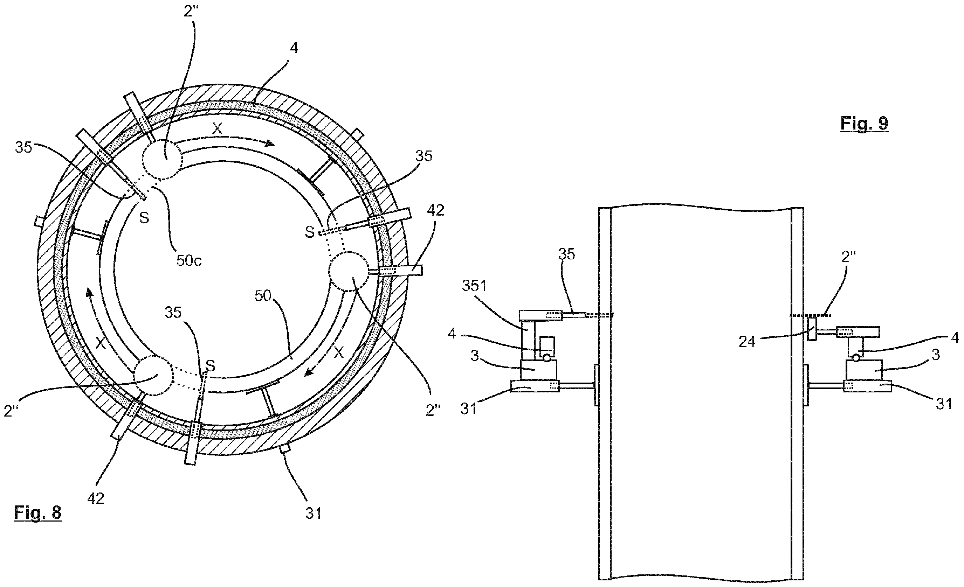

Fig. 8 zeigt eine Seitenschnittansicht in schematischer Darstellung eines abgewandelten nicht erfindungsgemäßen Beispiels einer Werkzeugführungsanordnung 1 mit einem Trennscheibenschneidwerkzeug 2" und einer Schnittbeabstandungsanordnung 35.

Zusätzlich zu dem in Fig. 7 aufgezeigten Beispielen sind noch drei Schnittbeabstandungsanordnungen 35 mittels einer Schnittbeabstandungshalterung 351 vorgesehen, wobei diese an dem Hauptring 3 ortsfest angeordnet sind. Hierbei werden die ortsfest angeordneten Schnittbeabstandungsanordnungen 35 in den Schnittkanal eingeführt, so dass das abzutrennende Turmsegment 50x nicht durch sein Eigengewicht heruntersacken kann.

Vorteilhaft bei der ortsfesten Anordnung an dem Hauptring 3 ist, dass auf diese Weise unmittelbar nach dem Entstehen des ersten ausreichend breiten Schnittkanals sofort eine Abstützung möglich ist und somit ein Steckenbleiben des Schneidwerkzeuges 2, 2', 2" verhindert wird.

Die in den Schnittkanal einzuführenden Abstandshalter können hierbei als Flacheisen oder auch als Keile ausgebildet sein. Diese Abstandshalter sind über Hydraulikzylinder in den Schnittkanal einführbar.

An dieser Stelle sei angemerkt, dass dieses zusätzliche Merkmal der Schnittbeabstandung selbstverständlich für alle Schneidvorgänge geeignet und anwendbar sind.

Fig. 9 zeigt eine Seitenschnittansicht in schematischer Darstellung des nicht erfindungsgemäßen Beispiels einer Werkzeugführungsanordnung 1 entsprechend der Fig. 8.

Auf der linken Seite ist eine der drei Schnittbeabstandungsanordnungen 35 dargestellt, wobei diese ortsfest am Hauptring 3 angeordnet ist.

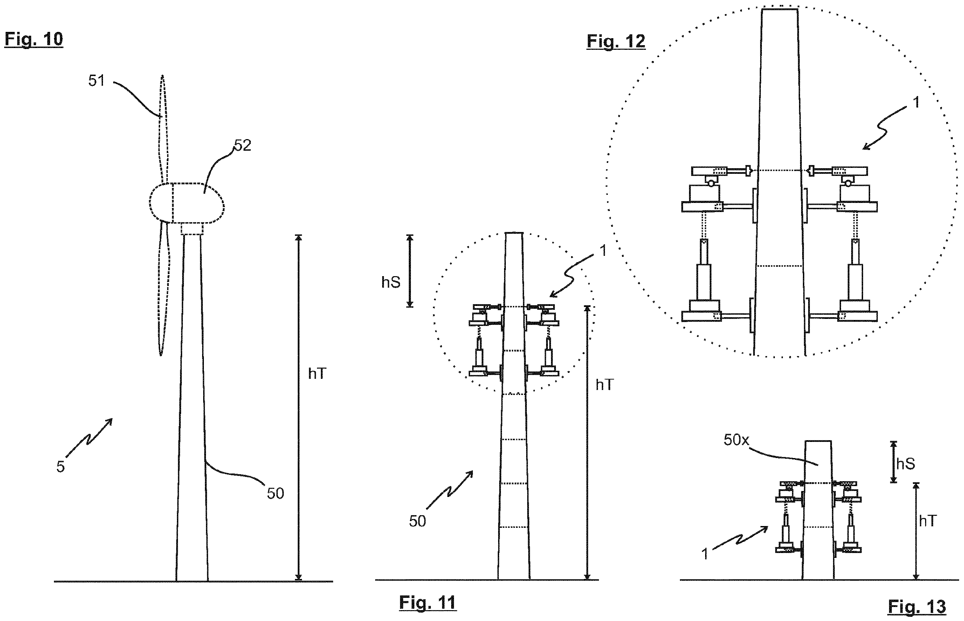

Auf der rechten Seite ist die Schneidanordnung mit der Variante als Sägeblattanordnung 2" dargestellt, wobei auch hier der Schneidwerkzeugantrieb 24 gezeigt ist. In Fig. 10 ist eine schematische Darstellung einer zu demontierenden Windenergieanlage 5 dargestellt.

Die Windenergieanlage 5 besteht aus einem Turm 50 mit einer Höhe hT, einer darauf angeordneten Gondel 54 und entsprechenden Rotorblättern 53, die über eine Nabe mit einem Generator verbunden sind.

Zur vollständigen Demontage einer Windenergieanlage 5 werden zunächst die Rotorblätter 53 mit der Nabe sowie die Gondel 54 vom Turm 50 entfernt. Anschließend erfolgt der Rückbau des Turmes 50 erfindungsgemäß durch Segmentierung des Turms 50 in einzelne Turmsegmente 50x durch Schneiden mittels einer Werkzeugführungsanordnung 1. Im Anschluss an das Segmentieren erfolgt jeweils nach einem Schnitt das Abheben des geschnittenen Segmentes 50x mit Hilfe eines mobilen Krans. Dieser Vorgang von Schneiden und Abheben wird bis zur vollständigen Demontage des Turms 50 wiederholt.

**Fig. 11** zeigt eine schematische Darstellung der Werkzeugführungsanordnung 1 gemäß dem Ausführungsbeispiel aus Fig. 3 eines noch vollständig rück zu bauenden Turmes 50 einer zu demontierenden Windenergieanlage 5.

Die Segmente 50x haben jeweils eine Höhe hS und werden nacheinander an den gestrichelten Linien geschnitten. In der Regel erfolgt nach jedem Schnitt 50c eines Segmentes 50x das Abheben mittels eines mobilen Krans.

In **Fig. 12** ist ein Vergrößerungsausschnitt aus der Fig. 11 mit einer Detaildarstellung der Werkzeugführungsanordnung 1 im oberen Abschnitt des Turmes 50 gezeigt.

Hier sind die Details der Werkzeugführungsanordnung 1 innerhalb des Turms 50 besser zu erkennen. Zu der Funktionsweise wird auf die Figur 3 Bezug genommen. **Fig. 13** zeigt eine schematische Darstellung der Werkzeugführungsanordnung 1 gemäß dem Ausführungsbeispiel aus Fig. 3 und des bereits teilrückgebauten Turmes 50 entsprechend der Fig. 11 der zu demontierenden Windenergieanlage 5.

Die Werkzeugführungsanordnung 1 ist nunmehr jeweils nach einem Schnitt 50c selbst eine Segmentstufe hS nach unten geklettert. Der Turm 50 ist stark zurückgebaut, wobei lediglich eine Restturmhöhe verbleibt.

### Bezugszeichenliste

- 1: Werkzeugführungsanordnung
- 2: Schneidwerkzeug
- 2': Schneidseilanordnung
- 21: Schneidseil
- 22: Umlenkrolle / Antriebsrolle
- 23: Spannvorrichtung
- 24: Schneidwerkzeugantrieb
- 2": Sägeblattanordnung
- 3: Hauptring
- 31: Haltearm
- 311: Kontaktmittel
- 32: Hubring
- 321: Hubhaltearm
- 322: Kontaktmittel
- 33: Hubanordnung
- 34: Aufhängevorrichtung
- 341: Hubseil
- 342: Segmentaufnahme / Haltekrallen
- 343: Kranseil
- 35: Schnittbeabstandungsanordnung
- 351: Schnittbeabstandungshalterung
- 4: Werkzeug ring
- 41: Lagerung / Drehkranz
- 42: Werkzeugarm
- 5: Windenergieanlage
- 50: Turm, Röhre
- 50x: Turmsegment, Röhrensegment
- 50c: durchtrennte Wandung
- 51: Innenwandung
- 52: Außenwandung
- 53: Rotorblätter
- 54: Gondel
- S: Startpunkt des Schneidvorgangs
- X: Bewegungsrichtung
- hS: Segmenthöhe
- hT: Turmhöhe

## Patentansprüche

1. Werkzeugführungsanordnung (1) zur Führung eines einen horizontalen Schnitt ausführenden Schneidwerkzeuges (2, 2', 2") an der Außenwandung (52) eines länglichen aufrecht stehenden Körpers mit einem im Wesentlichen kreisförmigen Querschnitt, nämlich einem konisch zulaufenden Turm (50), insbesondere einer Windenergieanlage (5),
umfassend
- einen Hauptring (3), der um die Außenwandung (52) legbar ist, mit mindestens drei Haltearmen (31), wobei diese in deren Länge verstellbar sind und radial in Richtung des Mittelpunktes des Hauptringes (3) am Hauptring (3) angeordnet sind und an deren zum Mittelpunkt des Hauptringes (3) zeigenden Enden Kontaktmittel (311) zur lösbaren Kontaktaufnahme zur Außenwandung (52) vorgesehen sind, wobei der Winkel vom Mittelpunkt des Hauptringes (3) aus gesehen zwischen zwei benachbarten Haltearmen (31) gleich ist;
- einen Werkzeugring (4), der über eine Lagerung und / oder Drehkranz (41) mit dem Hauptring (3) verbunden ist, wobei der Werkzeugring (4) relativ zu dem Hauptring (3) drehbar gelagert ist,
- der Hauptring (3) und der Werkzeugring (4) sich um eine gemeinsame Drehachse durch deren gemeinsamen Mittelpunkt gegeneinander verdrehend gelagert sind und zum Verdrehen des Werkzeugringes (4) relativ zum Hauptring (3) ein Antrieb vorgesehen ist;
- wenigstens eine Werkzeugaufnahme umfassend einen Werkzeugarm (42), wobei der Werkzeugarm (42) am Werkzeugring (4) und ein Schneidwerkzeug (2, 2', 2") zumindest teilweise an der Werkzeugaufnahme des Werkzeugarmes (42) angeordnet ist, wobei der Werkzeugarm (42) in dessen Länge verstellbar ausgebildet ist und radial in Richtung des Mittelpunktes des Werkzeugringes (4) ausgerichtet ist,
wobei der Hauptring (3) beim Verdrehen des Werkzeugringes (4) ortsfest und kraftschlüssig mit der Außenwandung (52) verbunden ist
**dadurch gekennzeichnet, dass**
ein Hubring (32) auf der Werkzeugring-fernen Seite des Hauptringes (3) vorgesehen ist, wobei der Hubring (32) mittels einer Hubanordnung (33) mit dem Hauptring (3) verbunden ist, so dass der Abstand zwischen Hauptring (3) und Hubring (32) verstellbar ist, und der Hubring (32) mindestens drei Hubhaltearme (321) aufweist, wobei die Hubhaltearme (321) radial zum Mittelpunkt des Hubringes (32) an dem Hubring (32) angeordnet sind und an deren zum Mittelpunkt des Hubringes (32) zeigenden Enden Kontaktmittel (322) zur lösbaren Kontaktaufnahme zur Außenwandung (52) vorgesehen sind, wobei der Winkel, vom Mittelpunkt des Hubringes (32) aus gesehen, zwischen zwei benachbarten Haltearmen (321) gleich ist und der Hubring (32) und der Hauptring (3) parallel zueinander ausgerichtet sind.

2. Werkzeugführungsanordnung (1) nach Anspruch 1,
**dadurch gekennzeichnet, dass**
der Hauptring (3) und / oder der Werkzeugring (4) wenigstens zweifach segmentiert ausgebildet sind.

3. Werkzeugführungsanordnung (1) nach einem der Ansprüche 1 oder 2,
**dadurch gekennzeichnet, dass**
das an dem Werkzeugring (4) wenigstens zwei oder wenigstens drei Werkzeugaufnahmen vorgesehen sind.

4. Werkzeugführungsanordnung (1) nach einem der vorangehenden Ansprüche,
**dadurch gekennzeichnet, dass**
die Haltearme (31) und / oder die Werkzeugarme (42) und / oder die Hubhaltearme (321) und / oder die Hubanordnung (33) als hydraulische Zylinder ausgebildet sind.

5. Werkzeugführungsanordnung (1) nach einem der vorangehenden Ansprüche,
**dadurch gekennzeichnet, dass**
eine Aufhängevorrichtung (34), aufweisend ein Hubseil (341) oder ein Hubelement und eine Aufnahme für ein Kranseil (343), vorgesehen ist, wobei die Aufhängevorrichtung (34) auf der obersten horizontalen Ebene des zu schneidenden aufrecht stehenden Körpers auflegbar ist und über den äußeren Umfang des Körpers wenigstens teilweise hinausragt und das Hubseil (341) oder das Hubelement seitlich des Körpers mit dem Hauptring (3) verbindbar ausgestaltet sind, so dass der Hauptring (3) in dessen Höhe verstellbar/ verfahrbar ist, wobei beim Verstellen oder Verfahren des Hauptrings (3) in dessen Höhe der Hauptring (3) über das Hubseil (341) oder das Hubelement an der Aufhängevorrichtung (34) hängt.

6. Werkzeugführungsanordnung (1) nach Anspruch 5,
**dadurch gekennzeichnet, dass**
die Aufhängevorrichtung (34) eine Segmentaufnahme und / oder Haltekrallen (342) zur Aufnahme von geschnittenen Segmenten (50x) aufweist.

7. Werkzeugführungsanordnung (1) nach einem der vorangehenden Ansprüche,
**dadurch gekennzeichnet, dass**
wenigstens in der Anzahl der Werkzeugaufnahmen Schnittbeabstandungsanordnungen (35) mit dazugehörigen Schnittbeabstandungshalterungen (351) an dem Hauptring (3) vorgesehen sind, wobei die Schnittbeabstandungsordnungen (35) nach Beginn des Schneidvorganges in den Schnittkanal in Bereich des Startpunktes des Schneidvorganges (S) eingeführt werden, so dass ein Absinken des teilweise oder vollständig geschnittenen Abschnittes bzw. Segmentes (50x) ausgeschlossen ist, wodurch der Schnittkanal offen gehalten ist.

8. Werkzeugführungsanordnung (1) nach einem der vorangehenden Ansprüche,
**dadurch gekennzeichnet, dass**
die Schneidwerkzeuge (2, 2', 2") auswählbar sind aus:
- Plasmaschneider,
- Bandschneider, Schneidseil, Trennseil, Zugkettenseil, Seilsäge,
- Sägeblatt,
- Laser,
- Düsenmagazin, mit wenigstens einer Schneiddüse und / oder Abrasivschneiddüse und / oder
eine Kombination aus den zuvor Genannten.

## Claims

1. Tool guiding assembly (1) for guiding a cutting tool (2, 2', 2''), which cutting tool makes a horizontal cut, on the outer wall (52) of an elongated, upright body having a substantially circular cross-section, namely a conically tapering tower (50), in particular of a wind turbine (5), comprising
- a main ring (3), which can be placed around the outer wall (52), having at least three holding arms (31), wherein these holding arms are adjustable in length and are arranged radially on the main ring (3) in the direction of the centre point of the main ring (3), and provided at the ends thereof that point towards the centre point of the main ring (3) are contact means (311) for making releasable contact with the outer wall (52), wherein the angle between two adjacent holding arms (31), as seen from the centre point of the main ring (3), is equal;
- a tool ring (4), which is connected to the main ring (3) via a bearing and/or a slewing ring (41), wherein the tool ring (4) is mounted in such a way as to be able to rotate relative to the main ring (3);
- the main ring (3) and the tool ring (4) are mounted to rotate relative to one another about a common axis of rotation through their common centre point, and a drive is provided for rotating the tool ring (4) relative to the main ring (3);
- at least one tool holder, comprising a tool arm (42), wherein the tool arm (42) is arranged on the tool ring (4) and a cutting tool (2, 2', 2'') is arranged at least in part on the tool holder of the tool arm (42), wherein the tool arm (42) is designed to be adjustable in length and is oriented radially in the direction of the centre point of the tool ring (4),
wherein the main ring (3) is stationary during the rotation of the tool ring (4) and is connected to the outer wall (52) with a force fit,
**characterized in that**
a lifting ring (32) is provided on the side of the main ring (3) remote from the tool ring, wherein the lifting ring (32) is connected to the main ring (3) by means of a lifting assembly (33) such that the distance between the main ring (3) and the lifting ring (32) is adjustable, and the lifting ring (32) has at least three lifting holding arms (321), wherein the lifting holding arms (321) are arranged radially on the lifting ring (32) towards the centre point of the lifting ring (32), and provided at the ends thereof that that point towards the centre point of the lifting ring (32) are contact means (322) for making releasable contact with the outer wall (52), wherein the angle between two adjacent holding arms (321), as seen from the centre point of the lifting ring (32), is equal and the lifting ring (32) and the main ring (3) are oriented parallel to one another.

2. Tool guiding assembly (1) according to claim 1, **characterized in that**
the main ring (3) and/or the tool ring (4) are segmented into at least two segments.

3. Tool guiding assembly (1) according to any one of claims 1 or 2,
**characterized in that**
at least two or at least three tool holders are provided on the tool ring (4).

4. Tool guiding assembly (1) according to any one of the preceding claims,
**characterized in that**
the holding arms (31) and/or the tool arms (42) and/or the lifting holding arms (321) and/or the lifting assembly (33) are designed as hydraulic cylinders.

5. Tool guiding assembly (1) according to any one of the preceding claims,
**characterized in that**
a suspension device (34) is provided, comprising a lifting cable (341) or a lifting element and a hitching attachment for a crane cable (343), wherein the suspension device (34) can be placed on the uppermost horizontal plane of the upright body to be cut and protrudes at least in part beyond the outer circumference of the body, and the lifting cable (341) or the lifting element at the side of the body are designed in such a way as to be able to be connected to the main ring (3) so that the main ring (3) is adjustable/displaceable in height, wherein, when the main ring (3) is being adjusted or displaced in height, the main ring (3) is suspended on the suspension device (34) via the lifting cable (341) or the lifting element.

6. Tool guiding assembly (1) according to claim 5, **characterized in that**
the suspension device (34) has a segment holder and/or holding claws (342) for holding cut segments (50x).

7. Tool guiding assembly (1) according to any one of the preceding claims,
**characterized in that**
cut spacing assemblies (35) with associated cut spacing retainers (351) are provided on the main ring (3) at least in equal number to the tool holders, wherein, once the cutting process has started, the cut spacing assemblies (35) are introduced into the cutting channel in the region of the starting point of the cutting process (S) so as to prevent any downward movement of the partially or fully cut portion or segment (50x), thereby keeping the cutting channel open.

8. Tool guiding assembly (1) according to any one of the preceding claims,
**characterized in that**
the cutting tools (2, 2', 2'') can be selected from:
- plasma cutter,
- band saw, cutting wire, jerk chain wire, wire saw,
- saw blade,
- laser,
- nozzle magazine, having at least one cutting nozzle and/or abrasive cutting nozzle,
and/or
a combination of the above.

## Revendications

1. Système de guidage d'outil (1) pour le guidage d'un outil de coupe (2, 2', 2") effectuant une coupe horizontale sur la paroi extérieure (52) d'un corps allongé placé verticalement ayant une section transversale essentiellement circulaire, à savoir une tour (50) conique, en particulier une éolienne (5),
**comprenant**
- une bague principale (3), qui peut être posée autour de la paroi extérieure (52), avec au moins trois bras de retenue (31), lesquels sont réglables en longueur et sont disposés sur la bague principale (3) radialement en direction du centre de la bague principale (3), et des moyens de contact (311) étant prévus à leurs extrémités orientées vers le centre de la bague principale (3) pour la mise en contact réversible avec la paroi extérieure (52), l'angle entre deux bras de retenue (31) voisins, considéré depuis le centre de la bague principale (3), étant égal ;
- une bague d'outil (4) qui est reliée à la bague principale (3) par l'intermédiaire d'un palier et/ou d'une couronne de rotation (41), la bague d'outil (4) étant logée rotative par rapport à la bague principale (3),
- la bague principale (3) et la bague d'outil (4) étant logées de manière à pouvoir tourner l'une par rapport à l'autre autour d'un axe de rotation commun passant par leur centre commun, et un entraînement étant prévu pour faire tourner la bague d'outil (4) par rapport à la bague principale (3) ;
- au moins un logement d'outil comprenant un bras d'outil (42), le bras d'outil (42) étant disposé sur la bague d'outil (4) et un outil de coupe (2, 2', 2") étant disposé au moins partiellement sur le logement d'outil du bras d'outil (42), le bras d'outil (42) étant réalisé de manière réglable dans sa longueur et étant orienté radialement en direction du centre de la bague d'outil (4),
la bague principale (3) étant reliée de manière fixe et par friction à la paroi extérieure (52) lors de la rotation de la bague d'outil (4),
**caractérisé en ce qu'**
une bague de levage (32) est prévue sur le côté de la bague principale (3) éloigné de la bague d'outil, la bague de levage (32) étant reliée à la bague principale (3) au moyen d'un système de levage (33), de sorte que la distance entre la bague principale (3) et la bague de levage (32) est peut être réglée, et la bague de levage (32) présentant au moins trois bras de retenue de levage (321), les bras de retenue de levage (321) étant disposés sur la bague de levage (32) de façon radiale par rapport au centre de la bague de levage (32) et des moyens de contact (322) étant prévus à leurs extrémités orientées vers le centre de la bague de levage (32) pour la mise en contact réversible avec la paroi extérieure (52), l'angle entre deux bras de retenue (321) voisins, considéré depuis le centre de la bague de levage (32), étant égal, et la bague de levage (32) et la bague principale (3) étant orientées parallèlement l'une à l'autre.

2. Système de guidage d'outil (1) selon la revendication 1,
**caractérisé en ce que**
la bague principale (3) et/ou la bague d'outil (4) sont réalisées avec au moins deux segments.

3. Système de guidage d'outil (1) selon l'une des revendications 1 ou 2, **caractérisé en ce qu'**
au moins deux, ou au moins trois logements d'outil sont prévus sur la bague d'outil (4).

4. Dispositif de guidage d'outil (1) selon l'une des revendications précédentes, **caractérisé en ce que**
les bras de retenue (31) et/ou les bras d'outil (42) et/ou les bras de retenue de levage (321) et/ou le système de levage (33) sont conçus sous la forme de vérins hydrauliques.

5. Système de guidage d'outil (1) selon l'une des revendications précédentes, **caractérisé en ce qu'**
un dispositif de suspension (34) est prévu, lequel présente un câble de levage (341) ou un élément de levage et un logement pour un câble de grue (343), le dispositif de suspension (34) pouvant être posé sur le plan horizontal supérieur du corps à couper placé verticalement et dépassant au moins partiellement de la périphérie extérieure du corps, et le câble de levage (341) ou l'élément de levage étant conçu de manière à pouvoir être relié à la bague principale (3) sur le côté du corps, de sorte que la bague principale (3) peut être réglée / déplacée en hauteur, la bague principale (3) étant suspendue au dispositif de suspension (34) par l'intermédiaire du câble de levage (341) ou de l'élément de levage lors du réglage ou du déplacement en hauteur de la bague principale (3).

6. Système de guidage d'outil (1) selon la revendication 5,
**caractérisé en ce que**
le dispositif de suspension (34) présente un logement de segment et/ou des griffes de retenue (342) pour recevoir des segments coupés (50x).

7. Système de guidage d'outil (1) selon l'une des revendications précédentes, **caractérisé en ce que**
des systèmes d'écartement de coupe (35) avec des supports d'écartement de coupe (351) correspondants sont prévus sur la bague principale (3) au moins en nombre égal au nombre de logements d'outil, les systèmes d'écartement de coupe (35) étant introduits après le début de l'opération de coupe dans le canal de coupe au niveau du point de départ de l'opération de coupe (S), de sorte qu'un abaissement du segment ou de la pièce (50x) partiellement ou entièrement coupé(e) est exclu, ce qui permet de maintenir le canal de coupe ouvert.

8. Système de guidage d'outil (1) selon l'une des revendications précédentes, **caractérisé en ce que**
les outils de coupe (2, 2', 2") peuvent être choisis parmi :
- des machines de découpe à plasma,
- des trancheuses à bande, des câbles de coupe, des câbles de séparation, des câbles de chaîne de traction, des scies à câble,
- des lames de scie,
- des lasers,
- des chargeurs de buses, avec au moins une buse de coupe et/ou une buse de coupe abrasive et/ou
une combinaison de ce qui précède.
